## Europäisches Patentamt
## European Patent Office
## Office européen des brevets

(11) Publication number: **0 181 089**
A1

# EUROPEAN PATENT APPLICATION

(21) Application number: 85307061.3

(22) Date of filing: 02.10.85

(51) Int. Cl.⁴: **B 01 D 35/00**
B 01 D 29/24, G 01 N 15/06
G 01 N 1/20

(30) Priority: 02.10.84 GB 8424798
27.06.85 GB 8516308

(43) Date of publication of application:
14.05.86 Bulletin 86/20

(84) Designated Contracting States:
AT BE CH DE FR IT LI NL SE

(71) Applicant: WATER RESEARCH CENTRE
P.O. Box 16 Henley Road Medmenham
Marlow Buckinghamshire SL7 2HD(GB)

(72) Inventor: Williams, Susan Mary
Peartree Cottage Goatacre Lane
Goatacre Nr. Calne Wiltshire(GB)

(72) Inventor: Van Dyck, Francis Seraphina Joseph
28 Pendennis Road Freshbrook
Swindon SN5 8QF Wiltshire(GB)

(74) Representative: Wain, Christopher Paul et al,
A.A. THORNTON & CO. Northumberland House 303-306
High Holborn
London WC1V 7LE(GB)

(54) Automatic filtration apparatus.

(57) A fluid filtration apparatus for taking samples of water at intervals over a period of time comprises a number of individual filter zones (10) each for receiving and filtering one sample of water, the respective sample being delivered to a respective zone by a fluid distributor (19). In one embodiment, the distributor is arranged to rotate about a central axis for connection with each filter in turn. A seal (20) engages with a seat (17) for each filter by means of a fluid operable bellows (7) extending to cause engagement and retracting to allow movement to the next filter.

FIG.2.

- 1 -

## AUTOMATIC FILTRATION APPARATUS

The present invention relates to an automatic filtering apparatus. More particularly, but not exclusively, the apparatus is intended to take samples of water, preferably at intervals over a period of time.

It is often necessary to investigate the cause and extent of discoloured water problems at various points in a distribution network. Hitherto, a sample of water has been taken and chemically analysed. This is a time-consuming process. Furthermore, it is often the case that the water supply at that particular point is not permanently discoloured but only becomes discoloured at certain times of the day. Thus the analysed sample may not necessarily be one that is discoloured.

A filtration apparatus is known from German OLS 1498720 in which a band of filter paper passes from a feed roll thereof through a working zone to a receiving roll. In the working zone, a volume of fluid is filtered through a portion of the filter paper to leave a residue thereon. That portion of the filter paper is then advanced to a drying and fixing station and is then wound onto the receiving roll. The process is repeated at intervals so that the filter paper band on the receiving roll will have a number of spaced discrete areas of dried residue, each corresponding to the filtering of one volume of liquid. These areas can then be examined or analysed as desired.

The apparatus is particularly designed to detect oils in water.

For certain uses, this apparatus has a number of serious disadvantages. It is essential that the residue be dried and fixed before the paper reaches the receiving roll. These steps, and especially the drying step, which is effected using heated air, require a large amount of energy which can only satisfactorily be supplied by connecting the apparatus to a mains electricity supply or otherwise providing a substantial power supply. Thus, the apparatus is not easily portable nor can it be used satisfactorily at locations remote from large power supplies.

Secondly, whilst drying and fixing are essential, they nevertheless can create problems in altering the appearance or composition of a residue. Furthermore, some residues after drying and fixing may still be unsuited for being rolled onto the paper receiving roll, in that they may crack or flake away, thus vitiating the analysis.

We have now devised a filtration apparatus by which these disadvantages can be avoided, and which can be made portable and of use at low power locations.

According to the present invention, there is provided a fluid filtration apparatus comprising a fluid inlet, a filtration array detachably fixed in position and comprising a plurality of filter zones arranged in a predetermined disposition, fluid distributor means to connect said fluid inlet to any selected one of said zones, and means so to control fluid flow as to filter a predetermined volume of said fluid through each selected one of the zones when the filter zone is connected to the inlet.

Thus, in contrast to the apparatus of OLS 1498720, the apparatus of the present invention does not employ a continuous strip of filter paper to be wound on a receiving roll. Instead, one or more discrete sheets of filter paper are used in a batch fashion, i.e. for a plurality of samples, there being one filter zone for each sample. When any or all the filter zones have been used, the filter paper therein is removed and replaced by a fresh sample. Individual filter papers may be used, one for each zone, or more preferably a single (larger) sheet of paper is used, on which are defined a plurality of individual filter zones. One convenient way of defining the zones is by laying over the sheet an apertured plate, each aperture defining a filter zone.

The filter zones do not move during filtration, but instead a fluid distributor means directs each individual liquid sample to its respective filter zone. For this purpose, the distributor means is preferably a movable arm, e.g. an arm swingable horizontally about a pivot over a ring of discrete filter zone inlets.

At appropriate intervals, the residue-bearing filter paper(s) are removed for examination or analysis as required. They may, for example, be burned to an ash residue, or analysed by visual or spectroscopic comparison with known standards. The apparatus can of course be used in association with a parallel chemical analysis apparatus.

The apparatus of the invention does not require any high power drying or other such steps, and its power requirements can thus be kept low and can be met by batteries or the like. The apparatus can easily be made portable and can be used at remote locations. Also, as is hereafter described, individual filtrates can routinely be obtained whereas this is difficult using the apparatus of the above German specification.

In order to keep power requirements low, we prefer to use a hydraulically operable seal in association with the fluid distributor means to ensure fluid tight connection to the selected filter zone during filtration. The hydraulically operable seal is preferably of the bellows type and is actuated by admission of water from the supply being sampled. Thus, the external energy requirement is minimal.

An embodiment of the invention will now be more particularly described by way of example and with reference to the accompanying drawings, in which:

FIGURE 1 is a schematic fluid flow diagram of an apparatus embodying the invention;

FIGURE 2 shows a connecting and filtering part of the apparatus; and

FIGURE 3 shows in more detail the connection and filtering part of the apparatus.

Referring now to the drawings, a fluid inlet 1 is shown which is intended for connection to a tap fed off a rising main. In order to inconvenience users of the water supply to the least possible extent, the apparatus may be made weatherproof so that it may be attached to a garden or garage tap. It can of course be attached at any convenient point in the water supply network.

In order to allow flushing of the water supply either before or between samples, the inlet 1 is connected to an outlet 2 through a pressure reducing regulator 3, an on/off flush valve 4 and a flow restrictor 5. The flush valve 4 may be operated by a timer to allow flushes for periods of up to 20 minutes at any specified intervals. The flow rate of the flush can be preset by means of the flow restrictor 5. Thus, when the apparatus is connected at the end of a service connection from the mains, the apparatus may take a sample from the service pipe, and then flush the service connection and take a second sample in effect from the main. Alternatively, samples may in effect be taken solely from the main - the service pipe having been flushed clear before each sample.

Also connected to inlet 1 through a low flow rate regulator is a set of hydraulic clamp bellows 7, the function of which will be described in more detail below. Bellows 7 are controlled by a clamp control valve 8 which allows water to flow to the bellows 7 to extend them, or alternatively (as drawn) allows water to escape from bellows 7 to drain 2 thereby causing the bellows to retract.

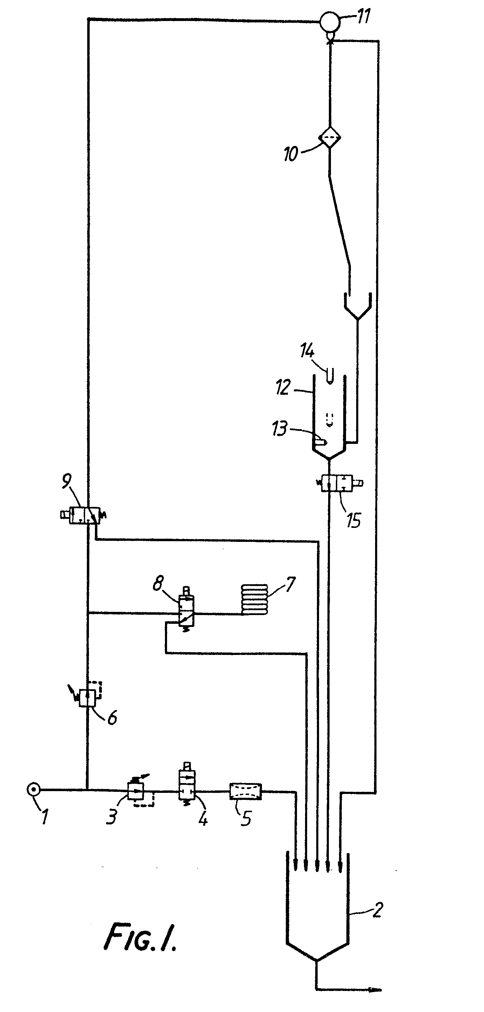

A filtration control valve 9, connected to inlet 1 through regulator 6, in one position allows water flow to a filter holder 10 through a swivel nozzle 11. In a preferred embodiment, a large number, for example twenty four, of such filter holders 10 are used, each containing a filter, and each fed in turn by the swivel nozzle 11. The outlet of each filter holder 10 passes to a filtrate measuring reservoir 12. The reservoir 12 contains a fixed low level detector 13 and variable test level detector 14, for which two positions are shown in Figure 1. The position of test level detector 14 can be preset to give a signal when a predetermined level is reached in the filtrate measuring reservoir 12, which signal closes filtration control valve 9 and thereby determines accurately the amount of sample taken each time. The contents of reservoir 12 may then pass to the drain 2 through reservoir drain valve 15.

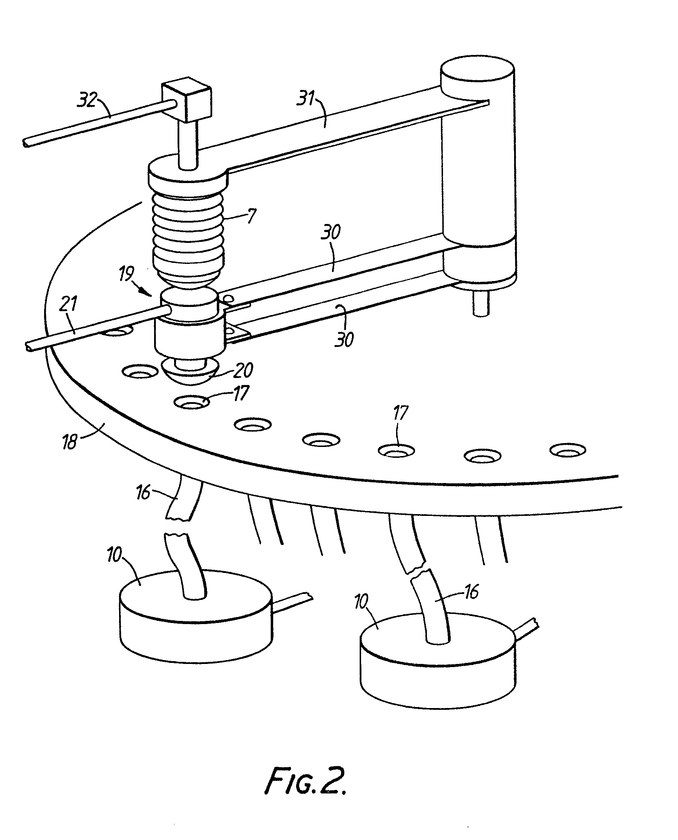

Figure 2 shows a section of the apparatus including two of the filter holders 10. For ease of maintenance and filter replacement, each is attached by a respective flexible hose 16 to a respective aperture 17, the apertures 17 being disposed around the periphery of a disc 18. A feed head assembly 19 is mounted arms 30 for rotation about the centre of disc 18 so that it can come into alignment with any one of apertures 17. Preferably, feed head 19 (and bellows 7) are moved step-wise, so head 19 moves from alignment with one aperture to alignment with the next succeeding aperture about the periphery of disc 18. Bellows 7 are actuated and de-actuated by water supplied and removed therefrom via line 32 connecting to valve 8.

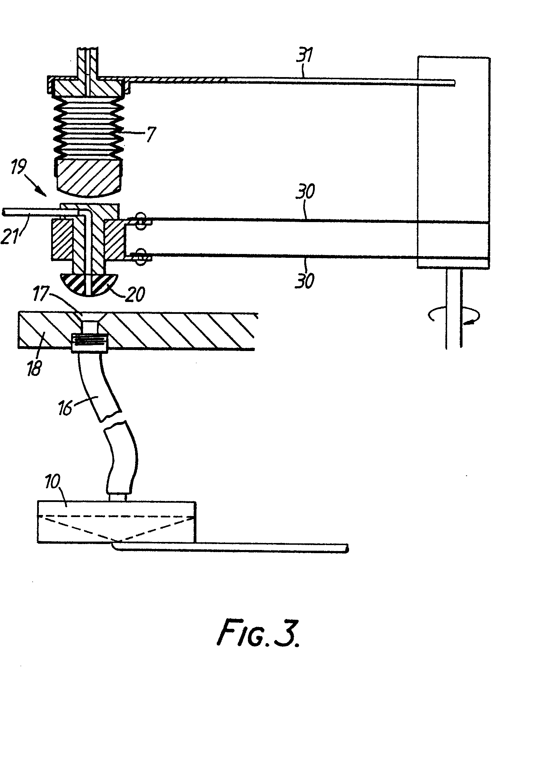

As is shown more clearly in Figure 3, each aperture 17 has its upper surface configured as a seat for a seal 20 disposed at the base of feed head assembly 19, through which seal passes a fluid feed pipe 21.

When a preset control system (not shown) indicates a requirement for taking a sample, the operation is as follows. Reservoir drain valve 15 is closed. This may be done immediately prior to taking a sample, immediately after taking the last sample or at some time in between. Clamp control valve 8 then connects the bellows 7 to the water inlet 1 causing their extension. This forces seal 20 into sealing engagement with the seat on upper surface of an aperture 17. After a preset time delay, filtration control valve 9 is opened and water passes through pipe 21, aperture 17, flexible hose 16 to a filter holder 10. The filtrate passes to the measuring reservoir 12. When a predetermined volume is present, measured by test level detector 14, filtration control valve 9 is closed and the sample taking ceases.

In order to reset the apparatus for the next sample, reservoir drain valve 15 is opened to allow the filtrate to pass to the drain 2. The clamp control valve 8 is opened to cause retraction of the bellows 7 and the feed head 19 is moved to alignment with another, preferably the next adjacent, aperture 17.

When the required number of samples have been taken, the apparatus can be disconnected and the filters examined. In cases where the apparatus is used to investigate discoloured water problems, it is generally sufficient to examine the filter papers for signs of discolouration. Alternatively, they can be examined for traces of magnetic residue or they may be burned and the ash weighed. The preferred filter is a 25mm diameter GF/C grade filter paper. Alternatively, 0.45 µm membrane filters may be used.

As stated above, the preferred number of filters is twenty four which may take samples once an hour over a day. However, if so desired, the interval between samples can be extended, for example up to eight hours.

An additional aperture 17 is provided in the disc 18. This however is not connected to a filter holder but passes directly to the measuring reservoir 12. This arrangement allows calibration of the sample volume.

In this connection the measuring reservoir has been described as having two level sensors 13 and 14. However alternative sensing means could be used. It would also be possible to replace this method of determining sample size by metering the input to the filter holders. Possible methods include provision of a time controlled flow valve allowing liquid to flow for a predetermined time or by a flow meter allowing a preset volume of liquid to pass.

Connection between inlet and apertures 17 has been described as being accomplished by means of a hydraulic bellows 7. However the bellows could be pneumatic or be worked by mechanical or electrical means. Indeed, it would not be necessary to provide a bellows at all. The feed head 19 could incorporate an alternative mechanical or electrical means to cause connection between seal 20 and apertures 17. It would alternatively be possible to maintain feed head 19 in one vertical disposition and to raise and lower disc 18 to cause sealing connection.

For investigation of discoloured water problems the preferred sample size is selected to be in the range between 85 and 350 mls. However, if so desired, this range could be extended in either direction.

The apparatus requires minimum maintenance and is very convenient to use. Only the filters are kept, the filtrate going to waste, whereby examination of the results is more easily accomplished. However, if so desired, samples of liquid may be collected for subsequent chemical analysis. For this purpose, an adapter maybe provided to take samples at predetermined times when actuated by the control system.

The apparatus is preferably self contained with electrical power to operate the solenoid valves being provided by batteries. However, a connection to the electric mains could be provided.

In summary, the apparatus can be connected to a tap and left for a preselected period during which it will: a) flush the water pipe for a predetermined period at a predetermined flow rate; b) take and filter a predetermined volume of water from the water pipe; and c) wait a predetermined period of time and repeat either of the above operations. Use of the apparatus enables a great reduction in analytical effort and enables investigation of discoloured water problems more quickly and more easily.

The apparatus has been described in use to take water samples from a supply pipe. It can however, be used to sample other fluids in a similar manner.

As will be clear to those skilled in the art, the apparatus described may be modified in a variety of ways. For example, for some purposes, it may be desired to collect the individual filtrate after passage through a respective filter. In order to do this, a collecting bottle can be provided below each filter, so that the filtrate passes into its respective bottle rather than to the measuring reservoir 12. Usually, if filtrates are being collected, the volume of sample filtered will be reduced from the normal $\frac{1}{2}$-litre to about 100 ml.

For some purposes, such as when collecting the filtrates as described above, it is advantageous to use a flowmeter, preferably with a digital read-out, instead of the measuring reservoir 12. Such a flowmeter is conveniently positioned between valve 9 and nozzle 11 (see Figure 1), and advantageously provides signals to a microprocessor which controls overall operation of the apparatus.

In the illustrated preferred embodiment, a large number, for example twenty four, filter holders 10 are used, each holding a filter paper. In certain circumstances, it can be quite a difficult and time-consuming job to change over so many individual small filter papers. Any such problem can be reduced or overcome by using fewer larger filter papers, with means for defining a number of individual discrete areas on each. Thus, a single filter paper could have, say six or more areas defined on it instead of using six or more individual small filter papers. The areas could be defined, for example, by superimposing on the large filter paper a plate with holes therein, each exposing an area of paper. Then, periodically, only one filter paper would need to be changed for every six or more filtering areas. Preferably, a seal is provided around each hole, between the plate and the paper.

When the fluid to be tested contains any relatively large particles, these can interfere in the proper working of valves etc in the apparatus. Accordingly, especially where the presence of large particles is known or expected, we prefer to provide a screen (for their removal) at or near the inlet (1) of the apparatus. The screen must not, of course, remove any small particles from the influent.

In order to provide an immediate indication of water cleanliness, means can be provided to detect the time taken for a sample of water to pass through a filter. This time being generally proportional to the water cleanliness in that the greater the amount of fine particles in the water, the more the filter will become occluded and the slower the flow rate therethrough.

In the illustrated embodiment, the bellows are expanded to push down on to assembly 19 to make the seal. Alternatively, the bellows could bear on arm 30 or could be used mounted below arms 30 and used to pull arm 30 downward, thus also effecting the seal.

CLAIMS:

1.        A fluid filtration apparatus comprising a fluid inlet (1,21), a filtration array detachably fixed in position and comprising a plurality of filter zones (10) arranged in a predetermined disposition, fluid distributor means (19) to connect said fluid inlet to any selected one of said zones, and means (9,14) so to control fluid flow as to filter a predetermined volume of said fluid through each selected one of the zones when the filter zone is connected to the inlet.

2.        An apparatus as claimed in claim 1, wherein the fluid distributor means comprises a movable arm (30) and means to move the arm from connection with one selected zone to another.

3.        An apparatus as claimed in either claim 1 or claim 2, wherein the fluid distributor means comprises a sealing means to ensure fluid tight connection to the selected zone at least during passage of the fluid therethrough.

4.        An apparatus as claimed in claim 3, wherein said sealing means comprises a fluid operable bellows (7) to move a seal (20) into and out of fluid tight engagement with a seat (17) surrounding the filter zone or an inlet thereto.

5.        An apparatus as claimed in any one of the preceding claims, wherein each filter zone is a discrete filter paper.

6.        An apparatus as claimed in any one of claims 1 to 4, wherein the filtration array is at least one sheet of filter paper having a plurality of filter zones spaced one from another thereon, each defining a zone.

7.    An apparatus as claimed in claim 6, wherein the areas are each defined by an aperture in a screen on the sheet.

8.    An apparatus as claimed in any one of the preceding claims, wherein a vessel (12) is provided to collect the filtrate, the vessel preferably comprising means (14) to detect when a predetermined volume of filtrate has been received.

9.    Apparatus according to any of claims 1 to 7, wherein some of the filtered liquid coming from each of the filter zones is collected in separate bottles.

10.    An apparatus as claimed in any one of claims 1 to 7, further comprising a flowmeter and valve upstream of the filter means to provide said predetermined volume of fluid.

FIG.I.

FIG.2.

0181089

FIG.3.

## European Patent Office

# EUROPEAN SEARCH REPORT

Application number

EP 85 30 7061

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-1 498 720 (F. MALZ) | | B 01 D 35/00<br>B 01 D 29/24<br>G 01 N 15/06<br>G 01 N 1/20 |
| | --- | | |
| A | FR-A-1 151 944 (SPINNFASER AG) | | |
| | --- | | |
| A | US-A-3 888 770 (SHLOMO AVITAL) | | |
| | --- | | |
| A | CH-A- 427 747 (AB ZALAB) | | |
| | ----- | | |

TECHNICAL FIELDS
SEARCHED (Int. Cl 4)

B 01 D
G 01 N

The present search report has been drawn up for all claims

| Place of search | Date of completion of the search | Examiner |
|---|---|---|
| THE HAGUE | 20-11-1986 | PYFFEROEN K. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03.82